(19) Europäisches Patentamt
European Patent Office
Office européen des brevets

(11) Publication number: **0 302 513 B1**

(12) **EUROPEAN PATENT SPECIFICATION**

(45) Date of publication of patent specification: **22.01.92**

(51) Int. Cl.5: **C08F 214/26**, //(C08F214/26, 236:06),(C08F214/26,236:20)

(21) Application number: **88112790.6**

(22) Date of filing: **05.08.88**

(54) **Modified polytetrafluoroethylene and process for preparing the same.**

(30) Priority: **05.08.87 JP 195828/87**

(43) Date of publication of application:
**08.02.89 Bulletin 89/06**

(45) Publication of the grant of the patent:
**22.01.92 Bulletin 92/04**

(84) Designated Contracting States:
**DE FR GB IT**

(56) References cited:

**NO REVELANT DOCUMENTS HAVE BEEN DISCLOSED**

(73) Proprietor: **DAIKIN INDUSTRIES, LIMITED**
**Umeda Center Building, 4-12, Nakazaki-nishi 2-chome, Kita-ku**
**Osaka-shi, Osaka-fu(JP)**

(72) Inventor: **Tatemoto, Masayoshi**
**13-5, Yanagawa-cho 2-chome**
**Takatsuki-shi Osaka-fu(JP)**
Inventor: **Yamamoto, Yoshihisa**
**4-209-1, Kaji-machi**
**Moriguchi-shi Osaka-fu(JP)**
Inventor: **Yamamoto, Katsutoshi**
**2-5-25, Shoya**
**Settsu-shi Osaka-fu(JP)**
Inventor: **Onogi, Hirofumi**
**2-21-21, Hitotsuya**
**Settsu-shi Osaka-fu(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

EP 0 302 513 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to modified polytetrafluoroethylene (hereinafter referred to as "PTFE") and a process for preparing the same. More particularly, the present invention relates to modified PTFE which is suitable for producing a porous article by low pressure compression molding and has good mechanical properties, particularly creep resistance and a process for preparing such modified PTFE.

A porous PTFE article is produced, for example, by drawing an unsintered PTFE film at a temperature lower than a melting point of PTFE to make it porous and then sintering the drawn PTFE film with keeping the drawn state at a temperature higher than the melting point of PTFE. By such method, only a porous PTFE film having a thickness of from several μm to 100 μm is produced, but a porous article having a desired shape cannot be prepared.

It is also known to prepare a porous PTFE article by compression molding unsintered PTFE powder under low pressure followed by sintering at a temperature higher than the melting point of PTFE. However, the density of PTFE powder increases considerably during sintering, so that it is difficult to produce a porous article having large porosity.

It is also described to prepare a porous PTFE article by sintering unsintered PTFE powder at a temperature higher than the melting point of PTFE, grinding the sintered PTFE powder, press molding the ground powder followed by sintering at a temperature higher than the melting point of PTFE (cf. Japanese patent Kokai Publication No. 66730/1986). By this method, steps for preparing the sintered PTFE powder are complicated.

Further, it is known to produce a porous PTFE article by molding PTFE powder together with an organic material which has no compatibility with PTFE and can be removed in a subsequent step and removing such material from the molded PTFE article to make it porous. In this method, the porous PTFE article may contain the unremoved material. Therefore, not only the production step but alto an inspection step become complicated.

PTFE is known to be a resin having excellent properties such as heat resistance and chemical resistance but it is poor in creep resistance.

PTFE is commercially produced by polymerizing tetrafluoroethylene by suspension polymerization, emulsion polymerization and the like. All the conventionally utilized polymerization techniques use radial polymerization initiators. No method has been proposed to prepare PTFE having stable properties in the absence of a polymerization initiator with good reproducibility.

One object of the present invention is to provide modified PTFE which is suitable for producing a porous article by low pressure compression molding and has good mechanical properties, particularly creep resistance.

Another object of the present invention is to provide a process for producing such modified PTFE.

The present invention is directed to a modified polytetrafluoroethylene prepared by copolymerising tetrafluoroethylene and 0.01 to 1 % by mole based on the mole of tetrafluoroethylene of a diene compound (I) in the absence of a radical polymerization initiator,
wherein diene compound (I) has the formula:

$CH_2 = CH-(CF_2)_n-CH = CH_2$ (I)

wherein n is an integer of 0 to 20
and wherein in place of or in addition to the diene compound (I), following diene compounds may be used:

$V_1-R-V_2$ (IV)

wherein $V_1$ and $V_2$ are the same or different and $CH_2 = CH-$, $CF_2 = CF-$, $CF_2 = CH-$, $CH_2 = CF-$, $CF_2 = CF-O-$, $CH_2 = CF-O-$ or $CHF = CF-O-$and R is a divalent residue selected from the group of residues of the formulae:

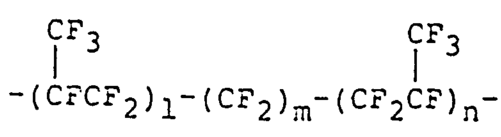

wherein 1 is an integer of 0 to 5, m is an integer of 0 to 20 and n is an integer of 0 to 5,

$-(CH)_p-$

wherein p is an integer of 1 to 20,

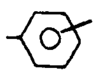, 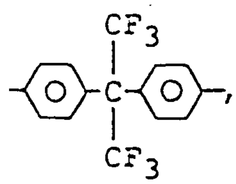, -CO- and $-SO_2-$;

a diene compound of the formula:

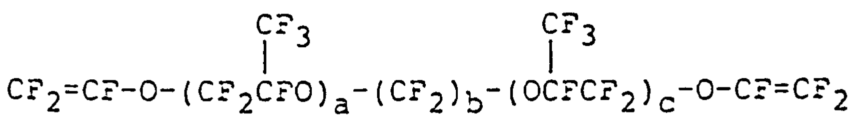 (V)

wherein a is an integer of 0 to 5, b is an integer of 0 to 20 and c is an integer of 0 to 5;
a diene compound of the formula:

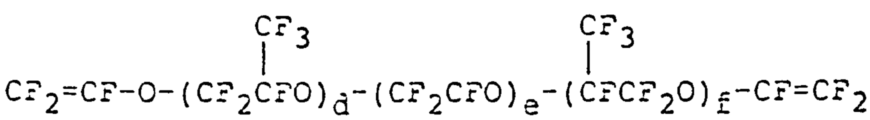

(VI)

wherein d is an integer of 0 to 5, e is an integer of 1 to 10 and f is an integer of 0 to 5;
or a diene compound of the formula:

$CF_2 = CF\text{-}O\text{-}(OCF_2CF_2CF_2)_g\text{-}O\text{-}(CF_2)_2\text{-}O\text{-}(CF_2CF_2CF_2O)_h\text{-}CF = CF_2$ (VII)

wherein g and h are each an integer of 0 to 5;
1,1-difluoropropadiene ($CH_2 = C = CF_2$);
and perfluoropropadiene ($CF_2 = C = CF_2$),
the sintering-densification indexes $P_{10}$, $P_{25}$ and,$P_{50}$ of unsintered powder of which are not larger than 0.2 wherein the sintering-densification index is measured and defined as follows:
unsintered PTFE powder (10 g) is filled in a mold having a diameter of 30 mm and premolded under pressure of 10, 25 or 50 bar ($kg/cm^2$) in a temperature range from 23 to 25 °C for 2 minutes to form a PTFE block, and the block is sintered. Then the sintering-densification index is defined from the change of density of the PTFE block before and after sintering according to the following equation:

$$P_n = d - d_O$$

in which
$P_n$ means the sintering-densification index of the PTFE block formed by premolding under pressure of n bar ($kg/cm^2$),
d ($g/cm^3$) means a density of the PTFE block after sintering, and
$d_O$ ($g/cm^3$) means a density of the PTFE block before sintering and
the sintering of the premolded PTFE block is effected under the following conditions: The PTFE block is heated from 290 °C to 380 °C at a heating rate of 2 °C/min., kept at 380 °C for 30 minutes, cooled to 294 °C at a cooling rate of 1 °C/min., kept at 294 °C for 24 minutes and removed from the furnace to cool it (ASTM D 1457-83).

According to another aspect of the present invention, there is provided a process for producing the modified PTFE comprising polymerizing tetrafluoroethylene and a diene compound of the formula:

$CH_2=CH-(CF_2)_n-CH=CH_2$ (I)

wherein n is an integer of 0 to 20, preferably 6 to 20 in the absence of a radical polymerization initiator.

Figs. 1-8 are the DSC charts of the PTFE polymers prepared in Examples 1, 2, 10, 11, 13, 14 and 15 and Comparative Example, respectively, and

Figs. 9 and 10 are graphs showing the relationship between the premolding pressure and the density in Experiment 1.

The present invention has been completed based on such findings that tetrafluoroethylene can be polymerized in the presence of a certain diene compound in the absence of a radical initiator, that the thus prepared modified PTFE has better mechanical properties than conventional PTFE or modified PTFE, and that when powder of such modified PTFE is compression molded under low pressure to produce a porous article, a porosity of the article can be easily changed widely by controlling the premolding pressure.

In the context of this invention, "unsintered" is intended to mean that freshly prepared PTFE has not been subjected to sintering treatment, namely heating to a temperature higher than a crystalline melting point of PTFE, and "powder" is intended to mean PTFE particles have an average particle size of 100 μm or less.

The sintering-densification index is measured and defined as follows:

Unsintered PTFE powder (10 g) is filled in a mold having a diameter of 30 mm and premolded under pressure of 10, 25 or 50 bar ($kg/cm^2$) in a temperature range from 23 to 25°C for 2 minutes to form a PTFE block, and the block is sintered. Then, the sintering-densification index is defined from the change of density of the PTFE block before and after sintering according to the following equation:

$$P_n = |d - d_0|$$

in which

$P_n$ means the sintering-densification index of the PTFE block formed by premolding under pressure of n bar ($kg/cm^2$),

d ($g/cm^3$) means a density of the PTFE block after sintering, and

$d_0$ ($g/cm^3$) means a density of the PTFE block before sintering.

The sintering of the premolded PTFE block is effected under the same conditions as employed in the measurement of a standard specific gravity (SSG) of PTFE according to ASTM D 1457-83. That is, the PTFE block is heated from 290°C to 380°C at a heating rate of 2°C/min., kept at 380°C for 30 minutes, cooled to 294°C at a cooling rate of 1°C/min., kept at 294°C for 24 minutes and removed from a furnace to cool it.

When a sintering-densification index was measured on conventional PTFE polymerized by using the radical polymerization initiator, most of the conventional PTFE had a sintering-densification index of larger than 0.25 at each premolding pressure, and none of them had a sintering-densification index of not larger than 0.2 at all of the premolding pressures of 10, 25 and 50 bar ($kg/cm^2$).

In addition, the modified PTFE according to the present invention has different characteristics from the conventional PTFE in a melting-crystallizing test by a differential scanning calorimeter (hereinafter referred to as "DSC").

The melting-crystallizing test by the DSC is effected as follows:

As a DSC, the DSC II type (manufactured by Perkin-Elmer) having high sensitivity is used. Unsintered PTFE powder (10 mg) is precisely weighed and charged in an exclusive aluminum pan of the DSC.

The PTFE sample in the aluminum pan is heated from 200°C to 380°C at a heating rate of 10°C/min. to measure a crystalline melting state of the PTFE sample. Corresponding to heat of fusing during melting, an endothermic peak due to melting (the initial or first melting peak) is recorded on a chart. Immediately after reaching 380°C, the sample is cooled to 200°C at a cooling rate of 10°C/min. to measure a crystallization state of the sample. In this step, corresponding to heat of crystallization, an exothermic peak due to crystallization (the first crystallizing peak) is recorded on the chart. After cooling to 200°C, the sample is again heated to 380°C at a heating rate of 10°C/min. during which another endothermic peak (the second melting peak) is recorded on the chart to obtain a crystal melting chart after melting and recrystallization.

In the above measurement, the rates of heating and cooling should be precisely adjusted because, as is well known, a peak temperature and a shape of the peak for the melting and crystallization of PTFE are greatly influenced by the heating and cooling rates during measurement (cf. for example, Apply Polymer Simposia, No. 2, 101-109 (1966)).

Although the melting peak temperature and a shape of an endothermic curve in the first melting step differ from one conventional PTFE to another due to difference of polymerization methods and the like, the melting peaks in the second and subsequent melting steps (hereinafter referred to as "second melting peak") appear at a temperature which is inherent to PTFE. In ASTM D 1457-83, the second melting temperature is defined as 327°C (±10°C). However, PTFE to be used in a practical molding of an article does not always have such wide second melting temperature range. Actually measured and reported second melting temperatures of PTFE are 327°C.

However, the second melting peak of the modified PTFE according to the present invention has an endothermic peak or shoulder at a temperature higher than the second melting peak temperature of the conventional PTFE, for example, at a temperature of 330°C or higher.

In the modified PTFE adequately polymerized according to the present invention, the endothermic peak at a higher temperature dominates the endothermic peak of the conventional PTFE at a lower temperature. As the result, the endothermic peak appears at a temperature of 330 to 345°C, particularly 332 to 340°C.

Usually, the first crystallizing peak appears at a temperature lower than the second melting peak temperature.

When these peaks are measured for the conventional PTFE, the temperature difference between these two peaks is 12°C or larger and mostly around 15°C.

In case of the modified PTFE according to the present invention, not only the second melting peak but also the first crystallizing peak shift to the high temperature ranges, and the first crystallizing peak shift larger than the second melting peak so that the temperature difference between these two peaks decreases to usually not larger than 10°C, particularly around 8°C.

The modified PTFE according to the present invention is prepared by copolymerizing tetrafluoroethylene and the diene compound (I) in the absence of a radical polymerization initiator.

The amount of the diene compound (I) is 0.01 to 1 % by mole based on the mole of tetrafluoroethylene. The diene compound (I) may be mixed with tetrafluoroethylene in gas states or dissolved in a suitable solvent to form a solution to which tetrafluoroethylene is dissolved under pressure. Then, the gaseous mixture or the solution is subjected to polymerization.

The diene compound (I) may be prepared by adding one molecule of ethylene to each molecular end of a diiodide compound of the formula:

$I-(CF_2)_n-I$ (II)

wherein n is the same as defined above in the presence of a radical initiator or by irradiation of light to form a diiodide compound of the formula:

$I-CH_2CH_2-(CF_2)_n-CH_2CH_2-I$ (III)

wherein n is the same as defined above and then removing hydrogen with an alkali.

In place of or in addition to the diene compound (I), following diene compounds may be used:

a diene compound of the formula:

$V_1-R-V_2$ (IV)

wherein $V_1$ and $V_2$ are the same or different and $CH_2=CH-$, $CF_2=CF-$, $CF_2=CH-$, $CH_2=CF-$, $CF_2=CF-O-$, $CH_2=CF-O-$ or $CHF=CF-O-$ and R is a divalent residue selected from the group consisting of residues of the formulae:

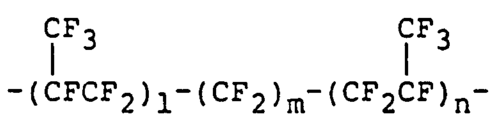

wherein 1 is an integer of 0 to 5, m is an integer of 0 to 20 and n is an integer of 0 to 5,

$-(CH_2)_p-$

wherein p is an integer of 1 to 20,

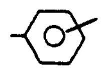, 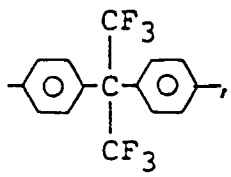, -CO- and $-SO_2-$;

a diene compound of the formula:

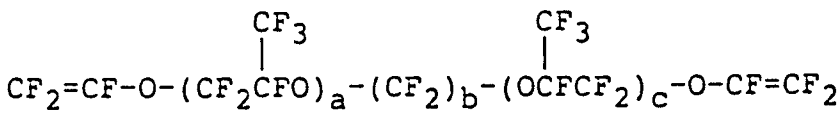 (V)

wherein a is an integer of 0 to 5, b is an integer of 0 to 20 and c is an integer of 0 to 5;

a diene compound of the formula:

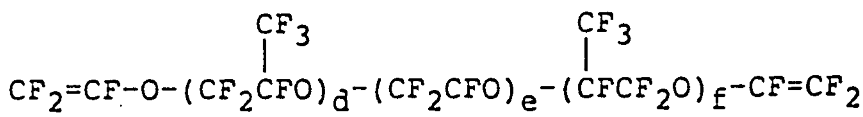

(VI)

wherein d is an integer of 0 to 5, e is an integer of 1 to 10 and f is an integer of 0 to 5;

a diene compound of the formula:

$CF_2 = CF-O-(OCF_2CF_2CF_2)_g-O-(CF_2)_2-O-(CF_2CF_2CF_2O)_h-CF = CF_2$ (VII)

wherein g and h are each an integer of 0 to 5;
1,1-difluoropropadiene ($CH_2 = C = CF_2$);
and perfluoropropadiene ($CF_2 = C = CF_2$).

The polymerization temperature is from -20 to 100 °C, and the pressure is from 1 to 31 bar ($kg/cm^2G$).

The polymerization can be carried out in the gas or liquid phase.

In case of the liquid phase polymerization, preferred solvents are flon type solvents (e.g. trichlorotrifluoroethane, dichlorotetrafluoroethane, tetrachlorodifluoroethane,), fluorine-containing amines (e.g. perfluorotriethylamine, perfluorotributylamine,) and perfluoroalkanes (e.g. perfluorohexane,). If necessary, water may be present in the solvent. When the modified PTFE which exhibits the characteristics of the present invention definitely is to be prepared, a solvent containing fluorine in a high content (e.g. dichlorotetrafluoroethane, tri(perfluoroalkyl)amines and perfluoroalkanes) is advantageously used.

When such modified PTFE is prepared by using a solvent such as trichlorotrifluoroethane, the diene compound is used in a higher amount and the polymerization is carried out at a temperature not higher than 50 °C and under high partial pressure of tetrafluoroethylene.

To proceed the polymerization more stably, tetrafluoroethylene is post-polymerized in the presence of a small amount of the polymer of the present invention as a seed in the absence of a radical polymerization initiator. As the seed polymer, preferably the modified PTFE exhibiting the characteristics of the present invention definitely is used. Further, the seed polymer is not subjected to thermal or chemical treatment which deteriorates the post-polymerization activity of the polymer.

The post-polymerization may be carried out in a gas or liquid phase in the presence or absence of the diene compound. When the modified PTFE which exhibits the characteristics of the present inventions is to be prepared, the diene compound is added to the reaction system. Even when the diene compound is not present in the post-polymerization, the produced polymer has the sintering-densification index of 0.2 or less.

The post-polymerized polymer can be used as a seed polymer for further post-polymerization.

In addition, in case of the liquid phase polymerization, a material to be blended (blend material) in the polymer may be dispersed in the solvent. By such method, a composite polymeric material containing the

blend material with better dispersibility than a composite material prepared by mere blending of the polymer powder and the blend material. As the blend material, exemplified are inorganic fillers for reinforcing the polymer and materials which can impart some function to the polymer such as electrically conductive materials, noble metal catalysts and enzymes.

In the polymerization, an additional modifier may be copolymerized in an amount of 2 % by weight or less, preferably 1 % by weight or less based on the amount of tetrafluoroethylene.

Specific examples of the additional modifier are hexafluoropropylene, vinyl fluoride, vinylidene fluoride, perfluoroalkyl vinyl ether, trichlorotrifluoroethylene.

In case of the gas phase reaction, a steel made reactor is preferably used. Also a fluidized bed type reactor can be used to eliminate polymerization heat effectively. In case of the liquid phase reaction, a stainless steel or glass made autoclave or a glass-lined autoclave is preferably used.

The polymerization reaction according to the present invention has different characteristics from the radical polymerization in the presence of the conventional polymerization initiator. That is, when tetrafluoroethylene is radical polymerized in a fluorine-containing solvent containing dissolved 1,1-diphenylpicryl-2-hydrazyl (hereinafter referred to as "DPPH") which is known as a polymerization inhibitor according to the conventional method, DPPH is completely consumed by radicals generated by the added radical polymerization initiator so that a color of the solution changes from purple to pale yellow and, thereafter, the the polymerization starts. On the contrary, in the polymerization which uses no polymerization initiator according to the present invention, the polymerization proceeds without consuming DPPH, namely with reserving the purple color of the solution. This means that the polymerization mechanism according to the present invention may differ from that of the radical polymerization.

The modified PTFE produced according to the present invention may have cross linking bonds formed through the diene compound. However, the content of the cross linking sites in the modified PTFE of the present invention may be far less than that in the conventional PTFE, since in an IR spectrum of the conventional PTFE, absorption at a wave number of 1,020 $cm^{-1}$ which is assigned to the cross linking sites is found, while in the IR spectrum of the modified PTFE of the present invention, such absorption is not found.

A modified PTFE prepared by copolymerization of tetrafluoroethylene and the diene compound (I) in the presence of the conventional radical polymerization initiator has different properties from the modified PTFE of the present invention, since the former has an endothermic peak in the DSC chart after melting and recrystallizing at a temperature of 320 to 325, while the latter has the endothermic peak at a temperature of 330 to 345 °C.

Such difference may be attributed to the fact the polymerization reactivities of the diene compound (I) and tetrafluoroethylene may vary with the polymerization modes so that the number of the cross linking sites contained in the polymer is different.

When the polymer powder of the present invention recovered from the polymerization mixture or fine power prepared by grinding such polymer powder is molded under a pressure much lower than that employed in the molding of PTFE to form a void free article and the change of density of the molded article before and after sintering is measured, the change of density of the modified PTFE according to the present invention is smaller than that of the PTFE prepared by the conventional radical polymerization. Therefore the PTFE powder of the present invention is suitable for producing a porous article.

The powder or fine powder of the modified PTFE of the present invention was compressed and sintered to produce a molded article and subjected to a creep test. As the result, it was found that, in comparison to the molded article of the conventional PTFE prepared by radical polymerization by using the polymerization initiator, the molded article of the modified PTFE of the present invention has much improved creep resistance.

The present invention will be illustrated by following Examples.

Example 1

In a steel made 20 l pressure vessel which had been evacuated, a diene compound (3 g) of the formula:

$CH_2=CH-(CF)_6-CH=CH_2$

in a gas state. Then, the vessel was pressurized to 10.3 bar (9.3 $kg/cm^2G$) by tetrafluoroethylene. After keeping the vessel at room temperature for about 2.5 hours, polymerization was initiated and carried out for about 15 minutes. When the vessel temperature raised to around 90 °C by polymerization heat, the reaction

was terminated. After purging the interior gas, a produced polymer (350 g) was recovered.

The sintering-densification indexes $P_{10}$, $P_{25}$ and $P_{50}$ of the produced polymer were 0.04, 0.05 and 0.05, respectively.

By using the DSC (DSC II type manufactured by Perkin-Elmer), the polymer (10 mg) was heated from 200 °C to 380 °C at a heating rate of 10 °C/min. and then cooled to 200 °C at a cooling rate of 10 °C/min. for recrystallization. Then, the polymer was again heated at a rate of 10 °C/min. to measure the melting of the crystallized polymer. The second melting peak temperature (hereinafter referred to as "endothermic peak temperature) was 337 °C, and the first crystallizing peak temperature was 328 °C. Thus, the difference between these two peak temperatures was 9 °C. The DSC chart of this polymer is shown in Fig. 1, in which the solid line and the broken lines represent the melting curve and the crystallizing curve, respectively.

Example 2

In a SUS stainless steel made 3 liter autoclave, trichlorotrifluoroethane (1.8 liters) was charged and replaced with nitrogen and tetrafluoroethylene repeatedly. Then, the autoclave was pressurized to 2 bar (1 $kg/cm^2G$) by tetrafluoroethylene. Through a SUS made nozzle equipped to the autoclave, the same diene compound as used in Example 1 (7.5 g) was added. Thereafter, the autoclave was again pressurized to 7 bar (6 $kg/cm^2G$) by tetrafluoroethylene. After 2 hours from the last pressurization, polymerization was initiated and continued for 3 hours at about 40 °C with supplying tetrafluoroethylene with pressure cycle between 6 and 7 bar (5 and 6 $kg/cm^2G$). After polymerization, the product was recovered from the autoclave, filtered and washed with water and dried to obtain a polymer (540 g).

By the same measuring method as in Example 1, the polymer had the endothermic peak temperature of 335 °C. The difference from the exothermic peak temperature during crystallization was 8 °C. The DSC chart of this polymer is shown in Fig. 2.

Example 3

In a SUS stainless steel made 0.4 liter autoclave, trichlorotrifluoroethane (0.1 liter) and pure water (0.1 liter) were charged followed by the addition of the same diene compound as used in Example 2 (4.5 g). Then, the autoclave was pressurized by tetrafluoroethylene and kept at 22.6 °C under 5.8 bar (4.8 $kg/cm^2G$). After one hour from the pressurization, polymerization was initiated and continued for 2 hours. After polymerization, a produced polymer (100 g) was recovered.

The sintering-densification indexes $P_{10}$, $P_{25}$ and $P_{50}$ of the produced polymer were 0.09, 0.08 and 0.09, respectively.

The polymer had the endothermic peak temperature of 335 °C. The difference from the exothermic peak temperature during crystallization was 7 °C.

Example 4

In a glass made 1 liter autoclave, trichlorotrifluoroethane (0.5 liter) and then the same diene compound as used in Example 2 were charged. The autoclave was pressurized to 7 bar (6 $kg/cm^2G$) by tetrafluoroethylene at 40 °C while stirring. After 3 hours from the pressurization, polymerization was initiated and continued for 2.5 hours. After polymerization, a produced polymer (140 g) was recovered.

The sintering-densification indexes $P_{10}$, $P_{25}$ and $P_{50}$ of the produced polymer were 0.07, 0.07 and 0.09, respectively.

The polymer had the endothermic peak temperature of 335 °C. The difference from the exothermic peak temperature during crystallization was 7 °C.

Example 5

In trichlorotrifluoroethane (0.5 liter) contained in the same autoclave as used in Example 4, $\gamma$-$Al_2O_3$ powder (5 g) was dispersed, and then the polymerization was carried out in the same manner as in Example 4 to obtain a polymer (145 g), which contained $\gamma$-$Al_2O_3$ well dispersed therein.

The sintering-densification indexes $P_{10}$, $P_{25}$ and $P_{50}$ of the produced polymer were 0.03, 0.03 and 0.02, respectively.

The polymer had the endothermic peak temperature of 335 °C. The difference from the exothermic peak temperature during crystallization was 8 °C.

Example 6

In the same manner as in Example 4 but using perfluoro(n-tributylamine) in place of trichlorotrifluoroethane, the polymerization was carried out at 30 °C for 4 hours to obtain a polymer (120 g).

The sintering-densification indexes $P_{10}$, $P_{25}$ and $P_{50}$ of the produced polymer were 0.04, 0.06 and 0.05, respectively.

The polymer had the endothermic peak temperature of 338 °C. The difference from the exothermic peak temperature during crystallization was 8 °C.

Example 7

In a glass made 1 liter autoclave, trichlorotrifluoroethane (600 ml) was charged. After evacuation, the autoclave was pressurized to 2 bar (1 kg/cm$^2$G) by tetrafluoroethylene, and then a diene compound (1 g) of the formula:

$CH_2=CH\text{-}(CF_2)_8\text{-}CH=CH_2$

was added. While stirring at room temperature, the autoclave was again pressurized to 9 bar (8 kg/cm$^2$G) by tetrafluoroethylene. After two hours from the pressurization, polymerization was initiated and continued for 1 hour. After polymerization, a produced polymer (50 g) was recovered.

The sintering-densification indexes $P_{10}$, $P_{25}$ and $P_{50}$ of the produced polymer 0.08, 0.07 and 0.07, respectively.

The polymer had the endothermic peak temperature of 337 °C. The difference from the exothermic peak temperature during crystallization was 8 °C.

Example 8

In the same autoclave as used in Example 4, the same diene compound as used in Example 4 (0.3 g) was charged. After purging with nitrogen and evacuation, the autoclave was pressurized to 9 bar (8 kg/cm$^2$G). After keeping the mixture at room temperature for 2 hours, polymerization was initiated and continued for 15 minutes to obtain a polymer (10 g).

The sintering-densification indexes $P_{10}$, $P_{25}$ and $P_{50}$ of the produced polymer were 0.05, 0.05 and 0.06, respectively.

The polymer had the endothermic peak temperature of 340 °C. The difference from the exothermic peak temperature during crystallization was 8 °C.

Example 9

In the same manner as in Example 8 but charging the polymer (ca. 1 g) in the autoclave, the polymerization was carried out. After about 20 minutes from pressurization, post-polymerization was initiated mainly from the precharged polymer and continued for 40 minutes to obtain a polymer (20 g). The polymer had the endothermic peak temperature of 339 °C.

The sintering-densification indexes $P_{10}$, $P_{25}$ and $P_{50}$ of the produced polymer were 0.05, 0.04 and 0.05, respectively.

The difference from the exothermic peak temperature during crystallization was 9 °C.

Example 10

In the same autoclave as used in Example 4, trichlorotrifluoroethane (0.6 liter), the same diene compound as used in Example 4 (0.3 g) and the polymer obtained in Example 8 (0.3 g) was charged. After replacing the interior with nitrogen and tetrafluoroethylene repeatedly, the autoclave was pressurized to 4.8 bar (3.8 kg/cm$^2$G) while stirring at 30 °C. Immediately after pressurization, polymerization was initiated and continued at 30 °C for 3 hours while supplying tetrafluoroethylene with pressure cycle between 6 and 7 bar (5 and 6 kg/cm$^2$G) to obtain a polymer (100 g).

The sintering-densification indexes $P_{10}$, $P_{25}$ and $P_{50}$ of the polymer were 0.07, 0.09 and 0.09, respectively.

The DSC chart of the polymer is shown in Fig. 3. The polymer had the endothermic peak temperature of 335 °C. The difference from the exothermic peak temperature during crystallization was 8 °C.

Example 11

In the same manner as in Example 10 but using perfluorohexane in place of trichlorotrifluoroethane, the polymerization was carried out at 30 °C for 3 hours to obtain a polymer (110 g).

The sintering-densification indexes $P_{10}$, $P_{25}$ and $P_{50}$ of the polymer were 0.04, 0.06 and 0.06, respectively.

The polymer had the endothermic peak temperature of 339 °C. The difference from the exothermic peak temperature during crystallization was 8 °C. The polymer showed sharp peak shapes as shown in Fig. 4 and had the characteristics of the present invention clearly.

Example 12

In the same manner as in Example 11 but using the polymer obtained in Example 11 (0.3 g) in place of the polymer obtained in Example 8, polymerization was carried out. It took about two hours till the initiation of polymerization. After 5 hour polymerization, a polymer (220 g) was obtained.

The polymer had the endothermic peak temperature of 337 °C. The difference from the exothermic peak temperature during crystallization was 8 °C.

Example 13

In the same manner as in Example 11 but using dichlorotetrafluoroethane in place of trichlorotrifluoroethane and pressuring the autoclave to 5.9 bar (4.9 kg/cm$^2$G) by tetrafluoroethylene, polymerization was carried out. Immediately after pressurization, polymerization was initiated and continued for 4.5 hours to obtain a polymer (118 g).

As calculated from Fig. 10, the sintering-densification indexes $P_{10}$, $P_{25}$ and $P_{50}$ of the polymer were 0.03, 0.02 and 0.02, respectively.

The DSC chart of the polymer is shown in Fig. 5.

The polymer had the endothermic peak temperature of 327 °C. The difference from the exothermic peak temperature during crystallization was 9 °C.

As the polymer of Example 11, the polymer prepared in this Example had the characteristics of the modified PTFE of the present invention clearly.

Example 14

In the same manner as in Example 11 but using dichlorotetrafluoroethane in place of trichlorotrifluoroethane and pressurizing the autoclave to 6.6 bar (5.6 kg/cm$^2$G), the polymerization was carried out. Immediately after pressurization, the polymerization was initiated. After 4 hour polymerization, a polymer (105 g) was obtained.

The sintering-densification indexes $P_{10}$, $P_{25}$ and $P_{50}$ of the polymer were 0.01, 0.02 and 0.03, respectively.

The polymer obtained in this Example exhibited the characteristics of the present invention less clearly.

The DSC chart of the polymer is shown in Fig. 6.

The polymer had the endothermic peak temperature of 326 °C. The difference from the exothermic peak temperature during crystallization was 11 °C. The endothermic peak had a shoulder at a temperature of 331 °C and higher.

Example 15

In the same manner as in Example 11 but using no diene compound, the polymerization was carried out.

Immediately after pressurization, the polymerization was initiated. After one hour and 40 minutes, a polymer (165 g) was obtained.

The polymer had the endothermic peak temperature of 328 °C. The difference from the exothermic peak temperature during crystallization was 13 °C. The endothermic peak had no shoulder.

The DSC chart of the polymer is shown in Fig. 7.

The sintering-densification indexes $P_{10}$, $P_{25}$ and $P_{50}$ of the polymer were 0.01, 0.04 and 0.05, respectively.

Therefore, the polymer obtained in this Example still had the characteristics of the modified PTFE of the

present invention.

Comparative Example

In the same autoclave as used in Example 11, trichlorotrifluoroethane (0.6 liter) and polytetrafluoroethylene which had been irradiated to reduce its molecular weight (2.5 g) were charged. After evacuation, the autoclave was pressurized to 4.8 bar (3.8 kg/cm$^2$G) while stirring at 30 °C. Immediately after pressurization, polymerization was initiated and continued for 4 hours at 30 °C while supplying tetrafluoroethylene to obtain a polymer (190 g).

The sintering-densification indexes $P_{10}$, $P_{25}$ and $P_{50}$ of the polymer were 0.26, 0.27 and 0.25, respectively.

The DSC chart of the polymer is shown in Fig. 8. The polymer had the endothermic peak temperature of 329 °C. The difference from the exothermic peak temperature during crystallization was 14 °C.

This polymer had no characteristics of the modified PTFE according to the present invention.

Experiment 1

In a mold having a diameter of 30 mm, the polymer powder obtained in Example 13 or commercially available polytetrafluoroethylene (Polyflon (trade mark) M-12 manufactured by Daikin Industries Ltd.) (each 10 g) was charged and precompressed under pressure of 11, 26, 51, or 301 bar (10, 25, 50 or 300 kg/cm$^2$G) for 2 minutes. The precompressed polymer was removed from the mold, placed in an electric furnace and sintered at 380 °C for 30 minutes. The relationship between the compression pressure and a density before and after sintering is shown in Figs. 9 and 10.

In Polyflon M-12, pores of the polymer were broken during sintering even when the polymer was precompressed under low pressure so that the molded article shrunk after sintering so that the increase of density was large. For example, the sintering-densification indexes $P_{10}$, $P_{25}$ and $P_{50}$ of Polyflon M-12 calculated from Fig. 9 were 0.43, 0.44 and 0.37, respectively.

On the contrary, the density of the modified PTFE according to the present invention less changed after sintering. The sintering-densification indexes $P_{10}$, $P_{25}$ and $P_{50}$ of this polymer were 0.03, 0.02 and 0.02, respectively as described in Example 13. These values indicate that this polymer is suitable for producing a porous article of PTFE.

The DSC chart of the polymer is shown in Fig. 3. The polymer had the endothermic peak temperature of 335 °C. The difference from the exothermic peak temperature during crystallization was 8 °C.

Experiment 2

In a mold having a diameter of 45 mm, the polymer powder obtained in Example 2 or commercially available polytetrafluoroethylene molding powder (Polyflon (trade mark) M-12 manufactured by Daikin Industries Ltd.) (each 85 g) was charged and precompressed under pressure of 301 bar (300 kg/cm$^2$G) for 10 minutes. The precompressed polymer contained in the mold was placed in an electric furnace and sintered at 380 °C for 2.5 hours.

Immediately after removing from the furnace, the polymer was air cooled under pressure of 501 bar (500 kg/cm$^2$G) for 40 minutes and water cooled to obtain a cylindrical molded article having a diameter of 45 mm and a length of 25 mm.

From this article, a sample of 11.3 mm in diameter and 10 mm in length was cut out in parallel with the compression direction and compressed at room temperature (24 °C) or 200 °C according to ASTM D-621. The permanent deformation results are shown in Table.

Table

| | Measuring conditions | PTFE of Example 2 | Polyflon M-12 |
|---|---|---|---|
| Compression creep | 2,000 psi, 24 °C, 24 hrs<br>1,000 psi, 200 °C, 24 hrs | 3.8 %<br>3.5 % | 5.9 %<br>5.8 % |
| Full deformation | 2,000 psi, 24 °C, 24 hrs<br>1,000 psi, 200 °C, 24 hrs | 10.6 %<br>18.9 % | 13.3 %<br>24.8 % |
| Permanent deformation | 2,000 psi, 24 °C, 24 hrs<br>1,000 psi, 200 °C, 24 hrs. | 2.8 %<br>4.6 % | 4.3 %<br>11.6 % |

## Claims

**1.** Modified polytetrafluoroethylene, prepared by copolymerizing tetrafluoroethylene and 0.01 to 1 % by mole based on the mole of tetrafluoroethylene of a diene compound (I) in the absence of a radical polymerization initiator,
wherein diene compound (I) has the formula:

$CH_2=CH-(CF_2)_n-CH=CH_2$ (I)

wherein n is an integer of 0 to 20
and wherein in place of or in addition to the diene compound (I), following diene compounds may be used:

$V_1-R-V_2$ (IV)

wherein $V_1$ and $V_2$ are the same or different and $CH_2=CH-$, $CF_2=CF-$, $CF_2=CH-$, $CH_2=CF-$, $CF_2=CF-O-$, $CH_2=CF-O-$ or $CHF=CF-O-$and R is a divalent residue selected from the group of residues of the formulae:

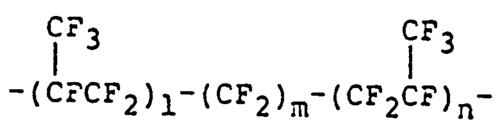

wherein 1 is an integer of 0 to 5, m is an integer of 0 to 20 and n is an integer of 0 to 5,

$-(CH_2)_p-$

wherein p is an integer of 1 to 20,

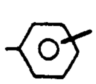 , 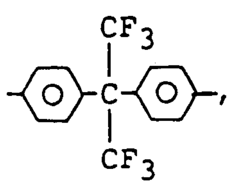 , -CO- and $-SO_2-$;

a diene compound of the formula:

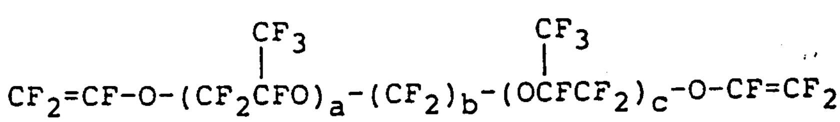 (V)

wherein a is an integer of 0 to 5, b is an integer of 0 to 20 and c is an integer of 0 to 5;
a diene compound of the formula:

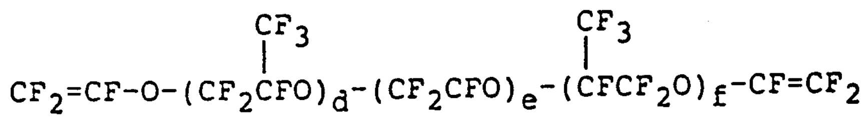

(VI)

wherein d is an integer of 0 to 5, e is an integer of 1 to 10 and f is an integer of 0 to 5;
or a diene compound of the formula:

$CF_2=CF\text{-}O\text{-}(OCF_2CF_2CF_2)_g\text{-}O\text{-}(CF_2)_2\text{-}O\text{-}(CF_2CF_2CF_2O)_h\text{-}CF=CF_2$ (VII)

wherein g and h are each an integer of 0 to 5;
1,1-difluoropropadiene ($CH_2=C=CF_2$);
and perfluoropropadiene ($CF_2=C=CF_2$),
the sintering-densification indexes $P_{10}$, $P_{25}$ and $P_{50}$ of unsintered powder of which are not larger than 0.2 wherein the sintering-densification index is measured and defined as follows:
unsintered PTFE powder (10 g) is filled in a mold having a diameter of 30 mm and premolded under pressure of 10, 25 or 50 bar (kg/cm$^2$) in a temperature range from 23 to 25 °C for 2 minutes to form a PTFE block, and the block is sintered; then the sintering-densification index is defined from the change of density of the PTFE block before and after sintering according to the following equation:

$$P_n = |d - d_0|$$

in which

$P_n$ means the sintering-densification index of the PTFE block formed by premolding under pressure of n bar (kg/cm$^2$),
d (g/cm$^3$) means a density of the PTFE block after sintering, and
$d_0$ (g/cm$^3$) means a density of the PTFE block before sintering and
the sintering of the premolded PTFE block is effected under the following conditions: The PTFE block is heated from 290 °C to 380 °C at a heating rate of 2 °C/min., kept at 380 °C for 30 minutes, cooled to 294 °C at a cooling rate of 1 °C/min., kept at 294 °C for 24 minutes and removed from the furnace to cool it (ASTM D 1457-83).

**2.** The modified polytetrafluoroethylene according to claim 1, which has an endothermic peak or shoulder in a temperature range of 330 °C or higher in a differential scanning calorimetric chart after melting and recrystallizing.

**3.** The modified polytetrafluoroethylene according to claim 1, which has an endothermic peak at a temperature of 330 °C to 345 °C and difference between said endothermic peak temperature in a differential scanning calorimetric chart after melting and recrystallizing and an exothermic peak temperature in the same measurement is not larger than 10 °C.

**4.** The modified polytetrafluoroethylene according to claim 1, which has an endothermic peak at a temperature of 332 °C to 340 °C and difference between said endothermic peak temperature in a differential scanning calorimetric chart after melting and recrystallizing and an exothermic peak temperature in the same measurement is not larger than 10 °C.

**5.** The modified polytetrafluoroethylene according to claim 1, which is a copolymer of tetrafluoroethylene and a diene compound of the formula:

$CH_2=CH\text{-}(CF_2)_n\text{-}CH=CH_2$ (I)

as defined in claim 1.

6. The modified polytetrafluoroethylene according to claim 5, wherein n in the formula (I) is an integer of 6 to 20.

7. A process for producing the modified polytetrafluoroethylene as defined in claim 1, wherein tetrafluoroethylene and 0.01 to 1 % by mole based on the mole of tetrafluoroethylene of the diene compound of formula (I) as defined in claim 1 are copolymerized in the absence of a radical polymerisation initiator.

8. The process according to claim 1, wherein n in the formula (I) is an integer of 6 to 20.

9. A process for producing modified polytetrafluoroethylene comprising polymerizing tetrafluoroethylene and a diene compound of the formula:

$CH_2 = CH\text{-}(CF_2)_n\text{-}CH = CH_2$ (I)

wherein n is an integer of 0 to 20 in the presence of a polymer prepared by the process according to claim 7.

10. The process according to claim 9, wherein n in the formula (I) is an integer of 6 to 20.

**Revendications**

1. Polytétrafluoroéthylène modifié, préparé par copolymérisation du tétrafluoroéthylène et de 0,01 à 1% molaire basé sur la quantité molaire de tétrafluoroéthylène d'un composé diénique (I) en l'absence d'un initiateur de polymérisation radicalaire, où le composé diénique (I) a la formule :

$CH_2 = CH\text{-}(CF_2)_n\text{-}CH = CH_2$ (I)

dans laquelle n est un nombre entier de 0 à 20, et où à la place de ou en addition au composé diénique (I) les composés diéniques suivants peuvent être utilisés :

$V_1\text{-}R\text{-}V_2$ (IV)

dans lesquels $V_1$ et $V_2$ sont identiques ou différents et représentent chacun $CH_2 = CN\text{-}$, $CF_2 = CF\text{-}$, $CF_2 = CH\text{-}$, $CH_2 = CF\text{-}$, $CF_2 = CF\text{-}O\text{-}$, $CH_2 = CF\text{-}O\text{-}$ ou $CHF = CF\text{-}O\text{-}$ et R est un résidu divalent choisi dans le groupe des résidus de formules :

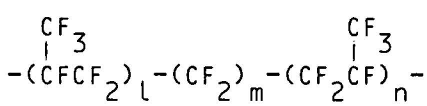

où l est un nombre entier de 0 à 5 , m est un nombre entier de 0 à 20 et n est un nombre entier de 0 à 5,

$-(CH_2)_p-$

où p est un nombre entier de 1 à 20,

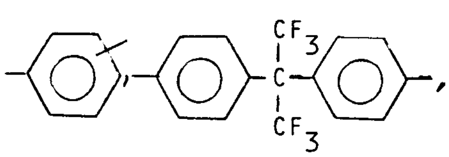 , -CO- et $-SO_2-$ ;

un composé diénique de formule :

$$CF_2=CF-O-(CF_2\overset{CF_3}{\overset{|}{C}}FO)_a-(CF_2)_b-(O\overset{CF_3}{\overset{|}{C}}FCF_2)_c-O-CF=CF_2 \qquad (V)$$

dans laquelle a est un nombre entier de 0 à 5, b est un nombre entier de 0 à 20 et c est un nombre entier de 0 à 5 ;
un composé diénique de formule :

$$CF_2=CF-O-(CF_2\overset{CF_3}{\overset{|}{C}}FO)_d-(CF_2CFO)_e-(\overset{CF_3}{\overset{|}{C}}FCF_2O)_f-CF=CF_2 \qquad (VI)$$

dans laquelle d est un nombre entier de 0 à 5, e est un nombre entier de 1 à 10 et f est un nombre entier de 0 à 5 ;
ou un composé diénique de formule :

$$CF_2=CF-O-(OCF_2CF_2CF_2)_g-O-(CF_2)_2-O-(CF_2CF_2CF_2O)_h-CF=CF_2 \qquad (VII)$$

dans laquelle g et h désignent chacun un nombre entier de 0 à 5 ;
1,1-difluoropropadiène ($CH_2=C=CF_2$) ;
et perfluoropropadiène ($CF_2=C=CF_2$),
les indices de densification par frittage $P_{10}$, $P_{25}$ et $P_{50}$ de la poudre frittée ne sont pas supérieurs à 0,2 où l'indice de densification par frittage est mesuré et défini comme suit :
la poudre de PTFE non frittée (10 g) est chargée dans un moule ayant un diamètre de 30 mm et prémoulée sous une pression de 10,25 ou 50 bar (kg/cm$^2$) dans un intevalle de températures de 23 à 25 °C pendant 2 min pour former un bloc de PTFE, et le bloc est fritté ; ensuite l'indice de densification par frittage est défini à partir du changement de densité du bloc de PTFE avant et après frittage conformément à l'équation suivante :

$$P_n = |d - d_0|$$

dans laquelle
$P_n$ désigne l'indice de densification par frittage du bloc de PTFE formé par prémoulage sous une pression de n bar (kg/cm$^2$),
d (g/cm$^3$) désigne la densité du bloc de PTFE après frittage, et
$d_0$ (g/cm$^3$) désigne la densité du bloc de PTFE avant le frittage et
le frittage du bloc de PTFE prémoulé est effectué dans les conditions suivantes : le bloc de PTFE est chauffé de 290 °C à 380 °C à un taux de chauffage de 2 °C/min, maintenu à 380 °C pendant 30 min, refroidi à 294 °C à un taux de refroidissement de 1 °C/min, maintenu à 294 °C pendant 24 min et enlevé du four pour le refroidissement (ASTM D 1457-83).

**2.** Le polytétrafluoroéthylène modifié selon la revendication 1, qui a un pic endothermique ou épaulement dans un intervalle de températures de 330 °C ou plus dans un graphique établi au calorimètre différentiel à balayage après fusion et recristallisation.

**3.** Le polytétrafluoroéthylène modifié selon la revendication 1, qui a un pic endothermique à une température de 330 °C à 345 °C et une différence entre cette température de pic endothermique dans un graphique établi au calorimètre différentiel à balayage après fusion et recristallisation et la température du pic exothermique dans la même mesure n'est pas supérieure à 10 °C.

**4.** Le polytétrafluoroéthylène modifié selon la revendication 1, qui a un pic endothermique à une température de 332 °C à 340 °C et une différence entre ladite température de pic endothermique dans

un graphique établi au calorimètre différentiel à balayage après fusion et recristallisation et une température de pic exothermique dans la même mesure n'est pas supérieure à 10° C.

**5.** Le polytétrafluoroéthylène modifié selon la revendication 1, qui est un copolymère de tétrafluoroéthylène et d'un composé diénique de formule :

$CH_2 = CH\text{-}(CF_2)_n\text{-}CH = CH_2$ (I)

comme défini dans la revendication 1.

**6.** Le polytétrafluoroéthylène modifié selon la revendication 5, selon lequel n dans la formule (I) est un nombre entier de 6 à 20.

**7.** Un procédé de production du polytétrafluoroéthylène modifié défini dans la revendication 1, selon lequel le tétrafluoroéthylène et 0,01 à 1% molaire basé sur la quantité molaire de tétrafluoroéthylène d'un composé diénique de formule (I) tel que défini dans la revendication 1 sont copolymérisés en l'absence d'un initiateur de polymérisation radicalaire.

**8.** Le procédé selon la revendication 1, selon lequel n dans la formule (I) est un nombre entier de 6 à 20.

**9.** Un procédé de production du polytétrafluoroéthylène modifié comprenant la polymérisation du tétrafluoroéthylène et d'un composé diénique de formule :

$CH_2 = CH\text{-}(CF_2)_n\text{-}CH = CH_2$ (I)

dans laquelle n est un nombre entier de 0 à 20 en présence d'un polymère préparé par le procédé selon la revendication 7.

**10.** Le procédé selon la revendication 9, selon lequel n dans la formule est un nombre entier de 6 à 20.

**Patentansprüche**

**1.** Modifiziertes Polytetrafluorethylen, hergestellt durch Copolymerisieren von Tetrafluorethylen und 0,01 bis 1 Mol-%, bezogen auf die Mole Tetrafluorethylen einer Dien-Verbindung (I) in Abwesenheit eines Radikalpolymerisationsinitiators,
worin die Dien-Verbindung (I) die Formel hat:

$CH_2 = CH\text{-}(CF_2)_n\text{-}CH = CH_2$ (I)

worin n eine ganze Zahl von 0 bis 20 ist und worin anstelle von oder zusätzlich zu der Dien-Verbindung (I) die folgenden Dien-Verbindungen verwendet werden können:

$V_1\text{-}R\text{-}V_2$ (IV)

worin $V_1$ und $V_2$ gleich oder verschieden sind und $CH_2 = CH$-, $CF_2 = CF$-, $CF_2 = CH$-, $CH_2CF$-, $CF_2 = CF\text{-}O$-, $CH_2 = CF\text{-}O$- oder $CHF = CF\text{-}O$-
und R ein zweiwertiger Rest ist, ausgewählt aus der Gruppe von Resten der Formeln:

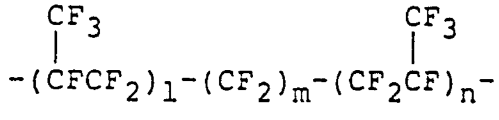

worin 1 eine ganze Zahl von 0 bis 5 ist, m eine ganze Zahl von 0 bis 20 ist und n eine ganze Zahl von 0 bis 5 ist ,

$-(CH_2)_p-$

worin p eine ganze Zahl von 1 bis 20 ist,

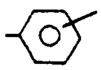, 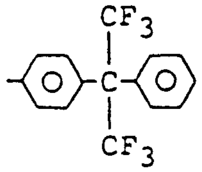, -CO- und $-SO_2-$;

eine Dien-Verbindung der Formel

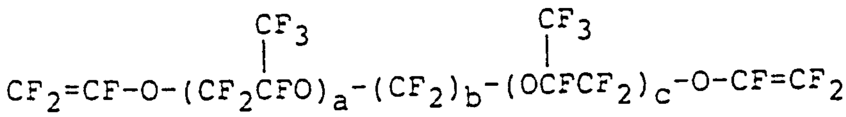 (V)

worin a eine ganze Zahl von 0 bis 5 ist, b eine ganze Zahl von 0 bis 20 ist und c eine ganze Zahl von 0 bis 5 ist;

eine Dien-Verbindung der Formel:

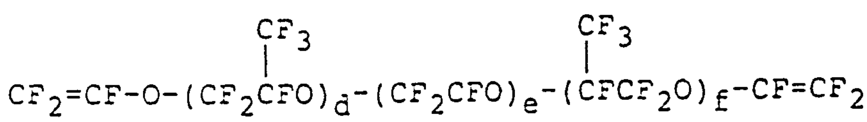 ; (VI)

worin d eine ganze Zahl von 0 bis 5 ist, e eine ganze Zahl von 1 bis 10 ist und f eine ganze Zahl von 0 bis 5 ist;

oder eine Dien-Verbindung der Formel

$CF_2 = CF\text{-}O\text{-}(OCF_2CF_2CF_2)_g\text{-}O\text{-}(CF_2)_2\text{-}O\text{-}(CF_2CF_2CF_2O)_h\text{-}CF = CF_2$ (VII)

worin g und h jeweils ganze Zahlen von 0 bis 5 sind;

1,1-Difluoropropadien ($CH_2 = C = CF_2$);
und
Perfluoropropadien ($CF_2 = C = CF_2$),

wobei die Sinterverdichtungsindizes $P_{10}$, $P_{25}$ und $P_{50}$ des ungesinterten Pulvers nicht größer als 0,2 sind wobei der Sinterverdichtungsindex wie folgt gemessen und definiert ist:
Ungesintertes PTFE-Pulver (10 g) werden in eine Form mit einem Durchmesser von 30 mm gefüllt und unter einem Druck von 10, 25 oder 50 bar ($kg/cm_2$) in einem Temperaturbereich von 23 bis 25 °C während zwei Minuten unter Ausbildung eines PTFE-Blocks vorgeformt, und der Block wird gesintert; dann wird der Sinterverdichtungsindex definiert aus der Veränderung der Dichte des PTFE-Blocks vor und nach dem Sintern nach der folgenden Gleichung

$$P_n = |d - d_0|$$

worin bedeuten
$P_n$ bedeutet den Sinterverdichtungsindex des PTFE-Blocks der beim Vorformen unter einem Druck von n bar ($kg/cm^2$) bebildet wurde,

d ($g/cm^3$) bedeutet eine Dichte des PTFE-Blocks nach dem Sintern, und
$d_0$ ($g/cm^3$) bedeutet eine Dichte des PTFE-Blocks vor dem Sintern, und
wobei das Sintern des vorgeformten PTFE-Blocks unter den folgenden Bedingungen vorgenommen wird: Der PTFE-Block wird auf 290°C bis 300°C erhitzt mit einer Erhitzungsrate von 2°C/Min., 30 Minuten bei 380°C gehalten, mit einer Kühlrate von 1°C/Min. auf 294°C abgekühlt, 24 Minuten bei 294°C gehalten und dann aus dem Ofen zum Abkühlen entfernt (ASTM D 1457-83).

**2.** Modifiziertes Polytetrafluorethylen gemäß Anspruch 1, das einen endothermen Peak oder eine Schulter in einem Temperaturbereich von 330°C oder höher in einer Differentialabtast-Kalorimetertabelle nach dem Schmelzen und Umkristallisieren hat.

**3.** Modifiziertes Polytetrafluorethylen gemäß Anspruch 1, welches ein endothermes Peak bei einer Temperatur von 330°C bis 345°C aufweist, und wobei die Differenz zwischen der endothermen Peaktemperatur in einer Differentialabtast-Kalorimetertabelle nach dem Schmelzen und Umkristallisieren und einer exothermen Peaktemperatur bei der gleichen Messung nicht größer als 10°C ist.

**4.** Modifiziertes Polytetrafluorethylen gemäß Anspruch 1, welches ein endothermes Peak bei einer Temperatur von 332°C bis 340°C hat, und wobei die Differenz zwischen der endothermen Peaktemperatur in einer Differentialabtast-Kalorimetertabelle nach dem Schmelzen und Umkristallisieren und einer exothermen Peaktemperatur bei der gleichen Messung nicht größer als 10°C ist.

**5.** Modifiziertes Polytetrafluorethylen gemäß Anspruch 1, welches ein Copolymer von Tetrafluorethylen und einer Dien-Verbindung der Formel:

$CH_2=CH\text{-}(CF_2)_n\text{-}CH=CH_2$ (I)

gemaß der Definition in Anspruch 1 ist.

**6.** Modifiziertes Polytetrafluorethylen gemäß Anspruch 5, worin n in der Formel (I) eine ganze Zahl von 6 bis 20 ist.

**7.** Verfahren zur Herstellung des modifizierten Polytetrafluorethylens, wie in Aspruch 1 definiert, bei dem man Tetrafluorethylen und 0,01 bis 1 Mol-%, bezogen auf die Mole Tetrafluorethylen der Dien-Verbindung der Formel (I) wie in Anspruch 1 definiert, in Abwesenheit eines Radikalpolymerisationsinitiators copolymerisiert.

**8.** Verfahren gemäß Anspruch 1, bei dem n in der Formel (I) eine ganze Zahl von 6 bis 20 ist.

**9.** Verfahren zur Herstellung eines modifizierten Polytetrafluorethylens, umfassend das Polymersieren von Tetrafluorethylen und einer Dien-Verbindung der Formel:

$CH_2=CH(CF_2)_n\text{-}CH=CH_2$ (I)

worin n eine ganze Zahl von 0 bis 20 ist in Gegenwart eines Polymers hergestellt nach dem Verfahren gemäß Anspruch 7.

**10.** Verfahren gemäß Anspruch 9, bei dem n in der Formel (I) eine ganze Zahl von 6 bis 20 ist.

Fig. 1

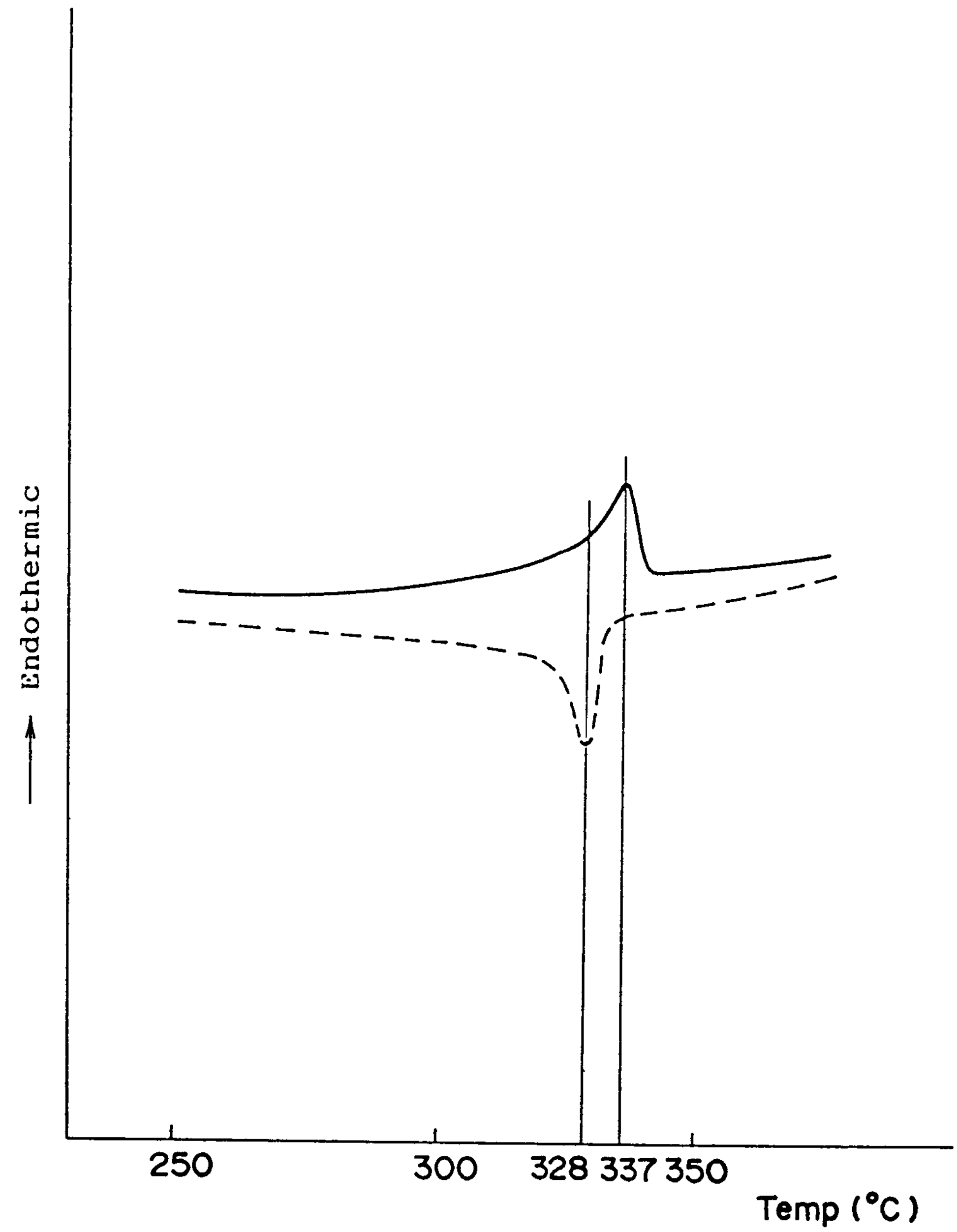

Fig. 2

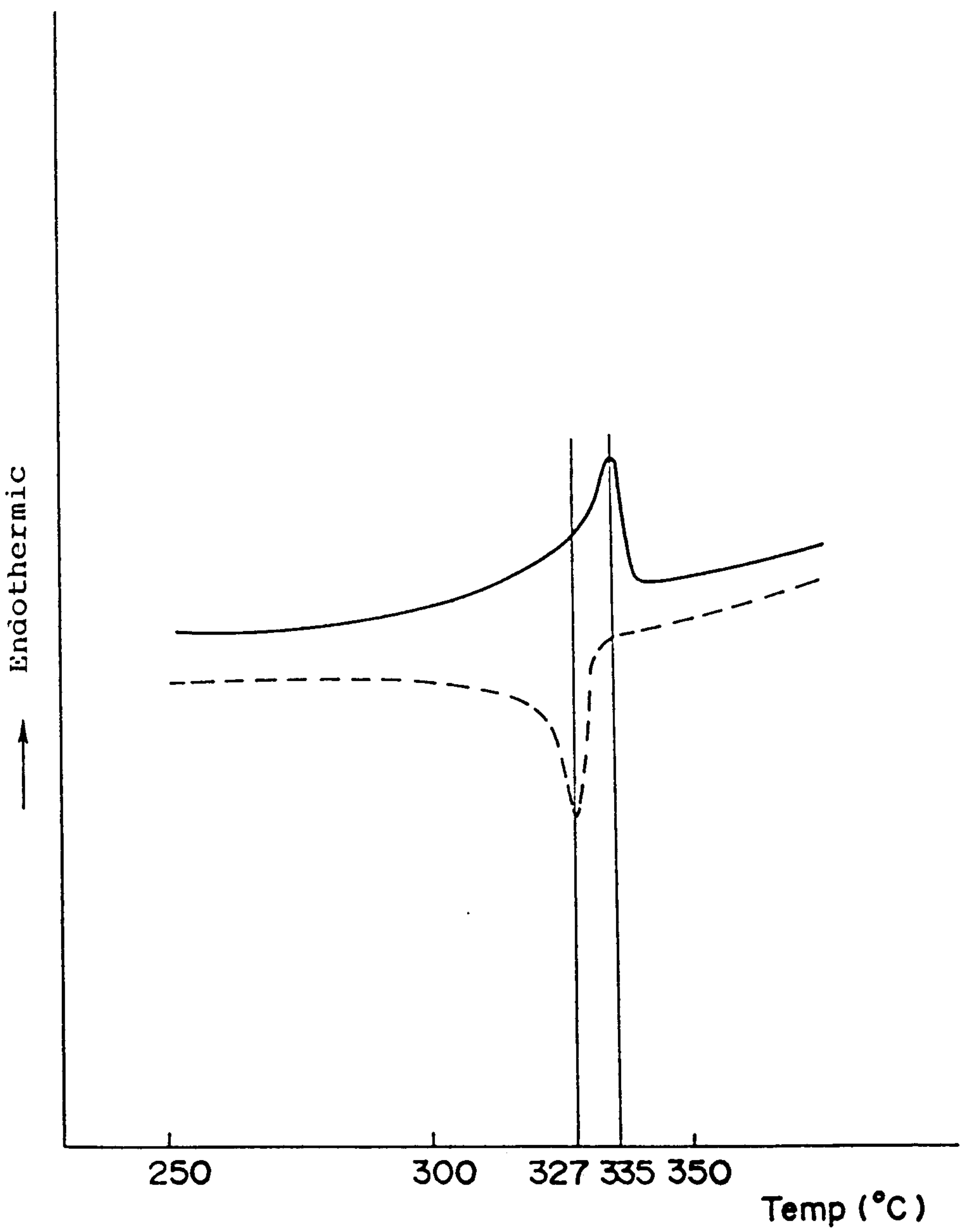

Fig.3

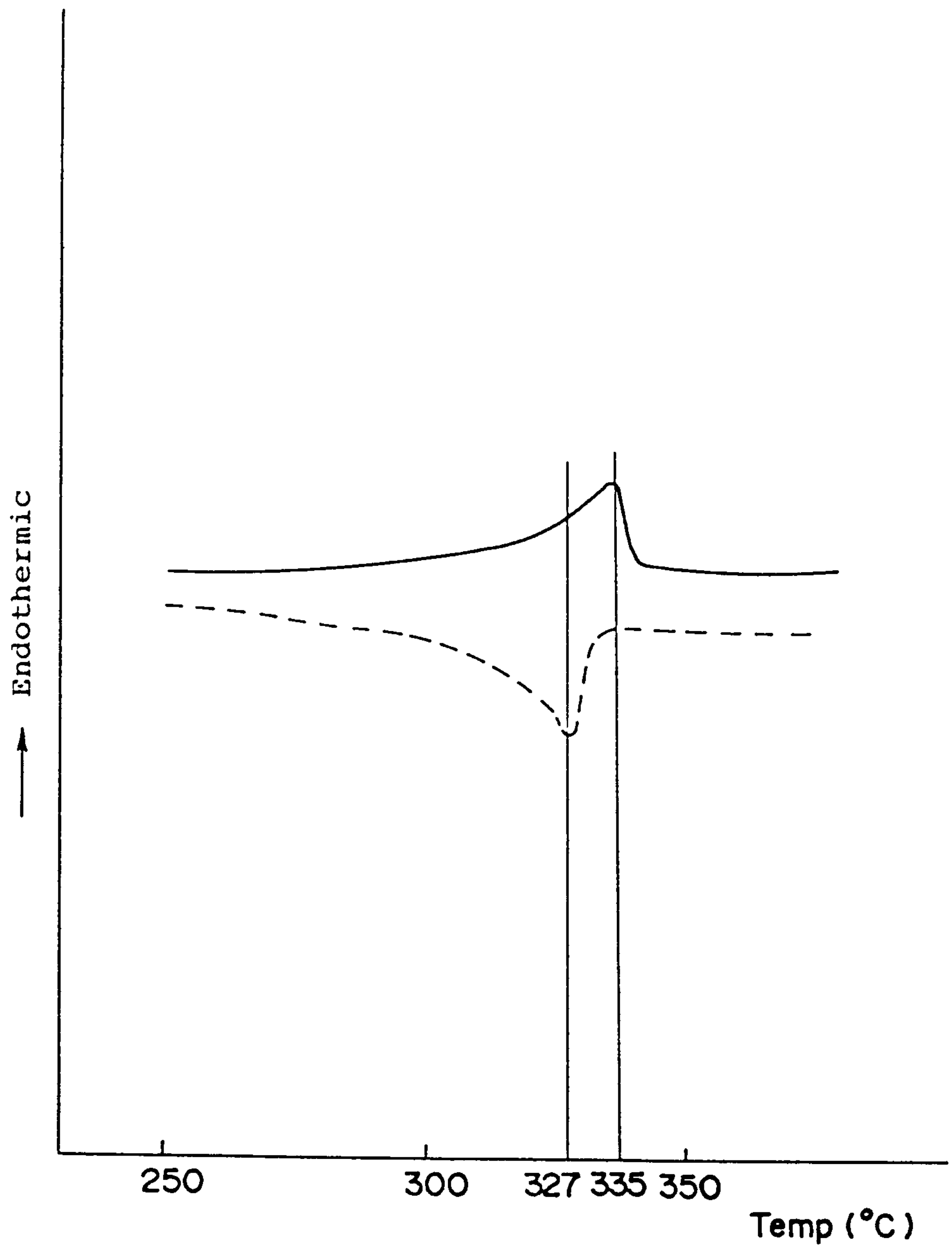

Fig. 4

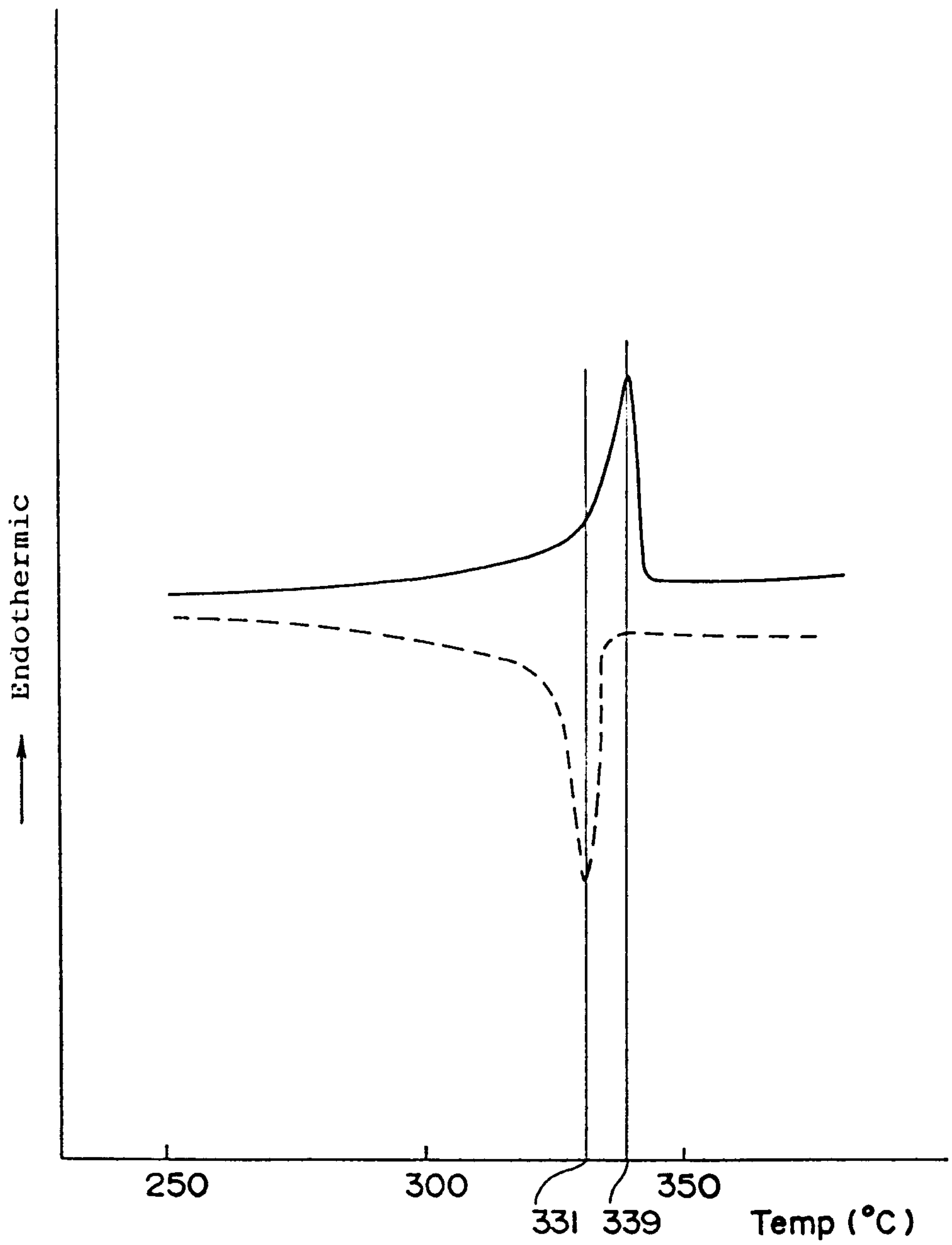

Fig. 5

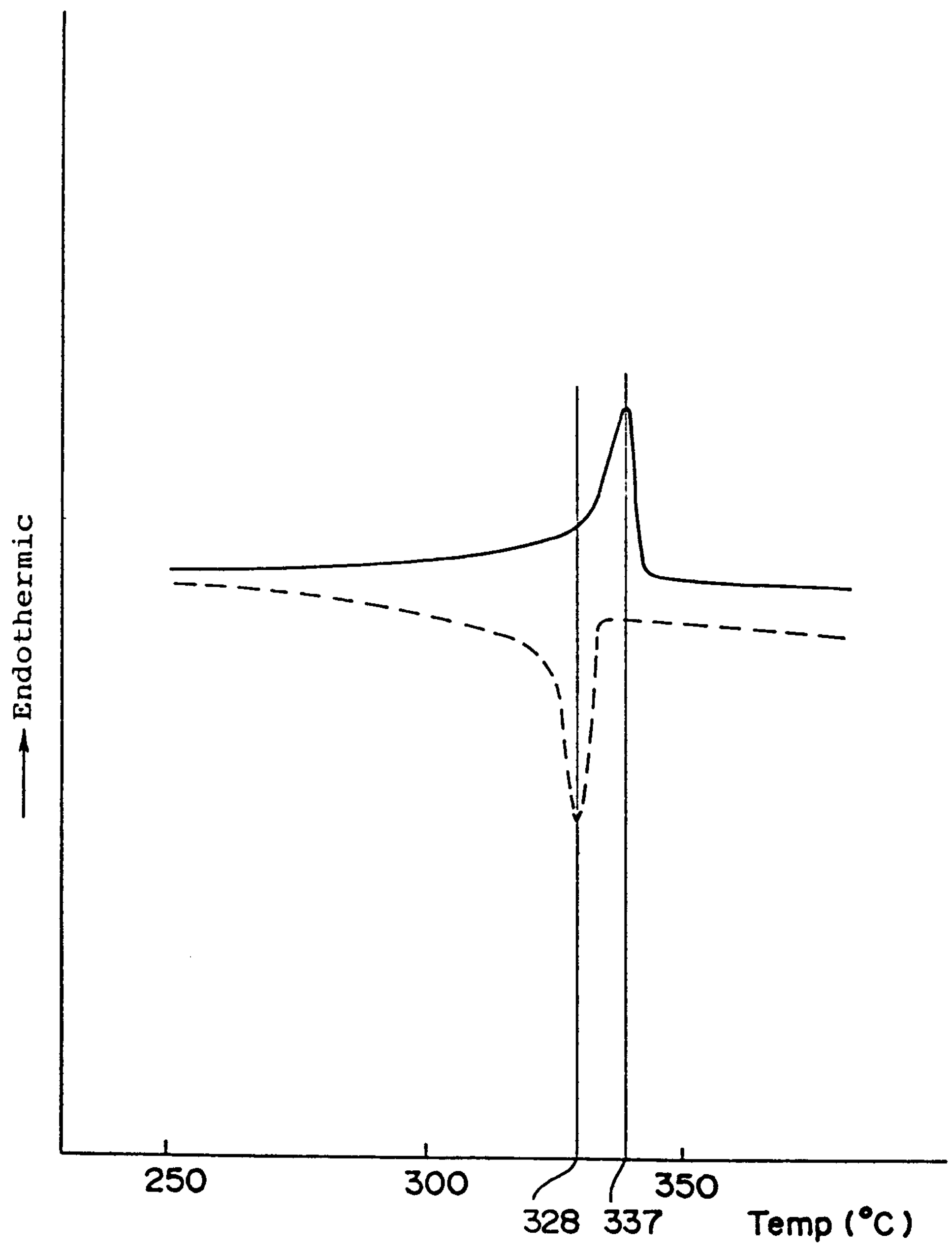

Fig. 6

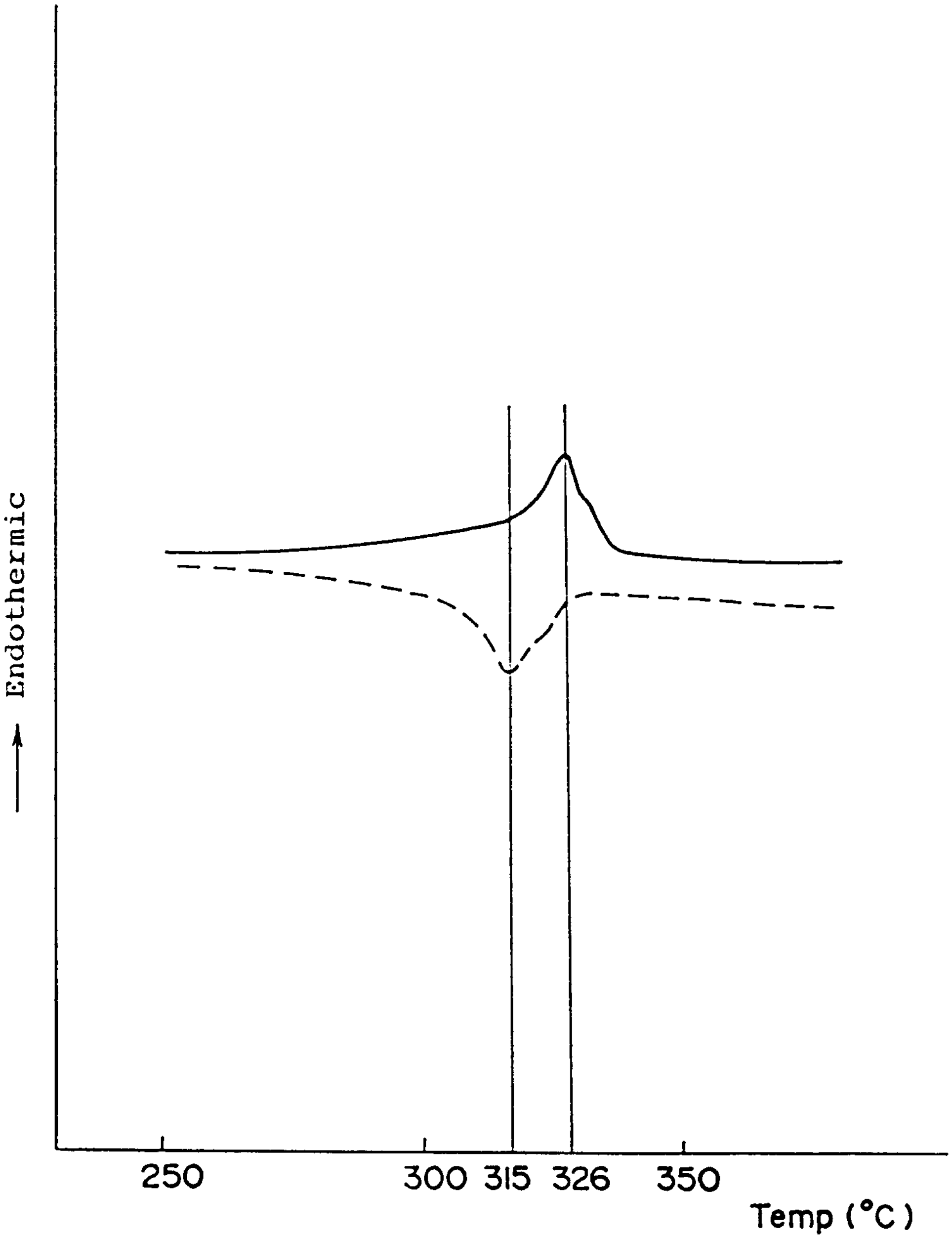

Fig. 7

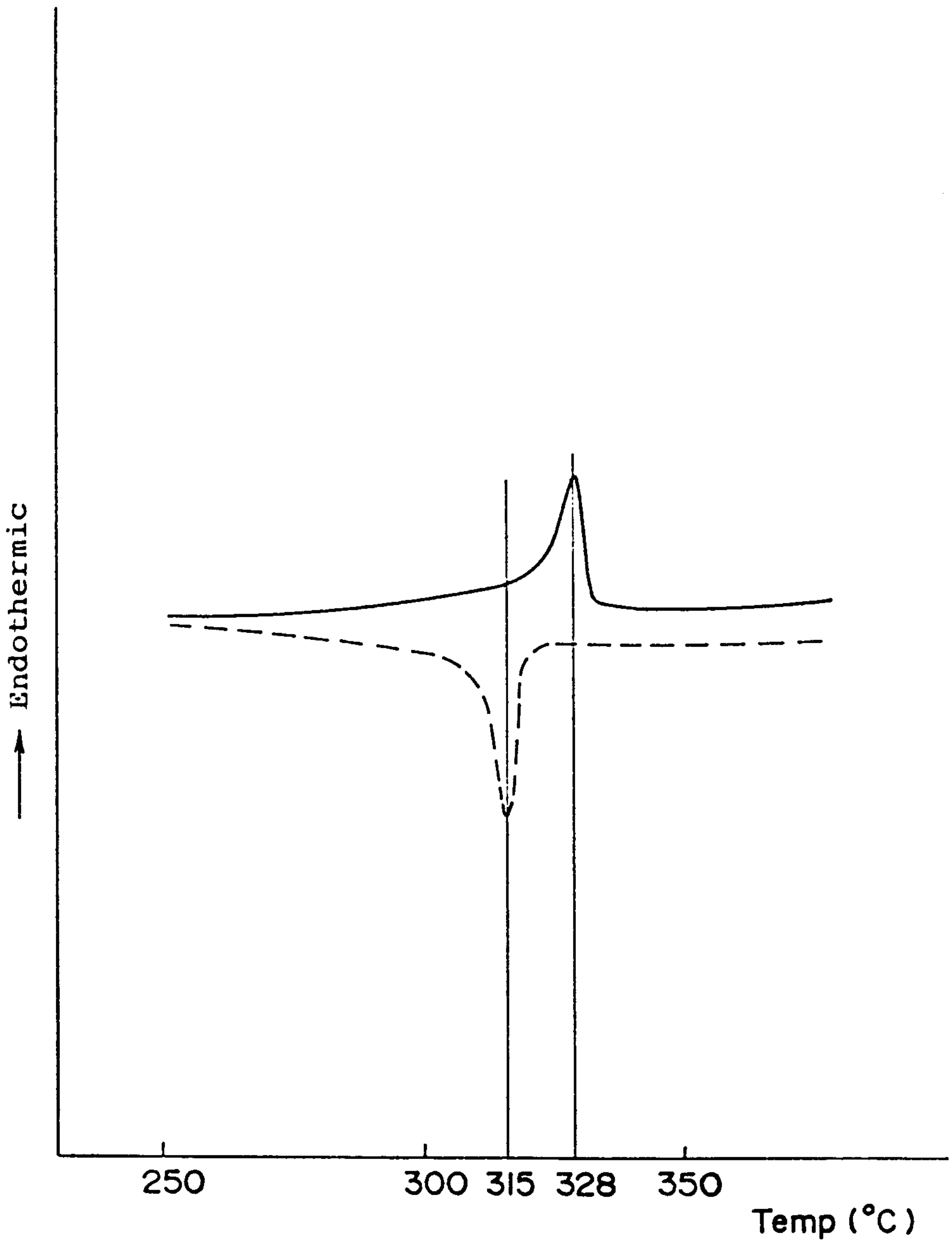

Fig. 8

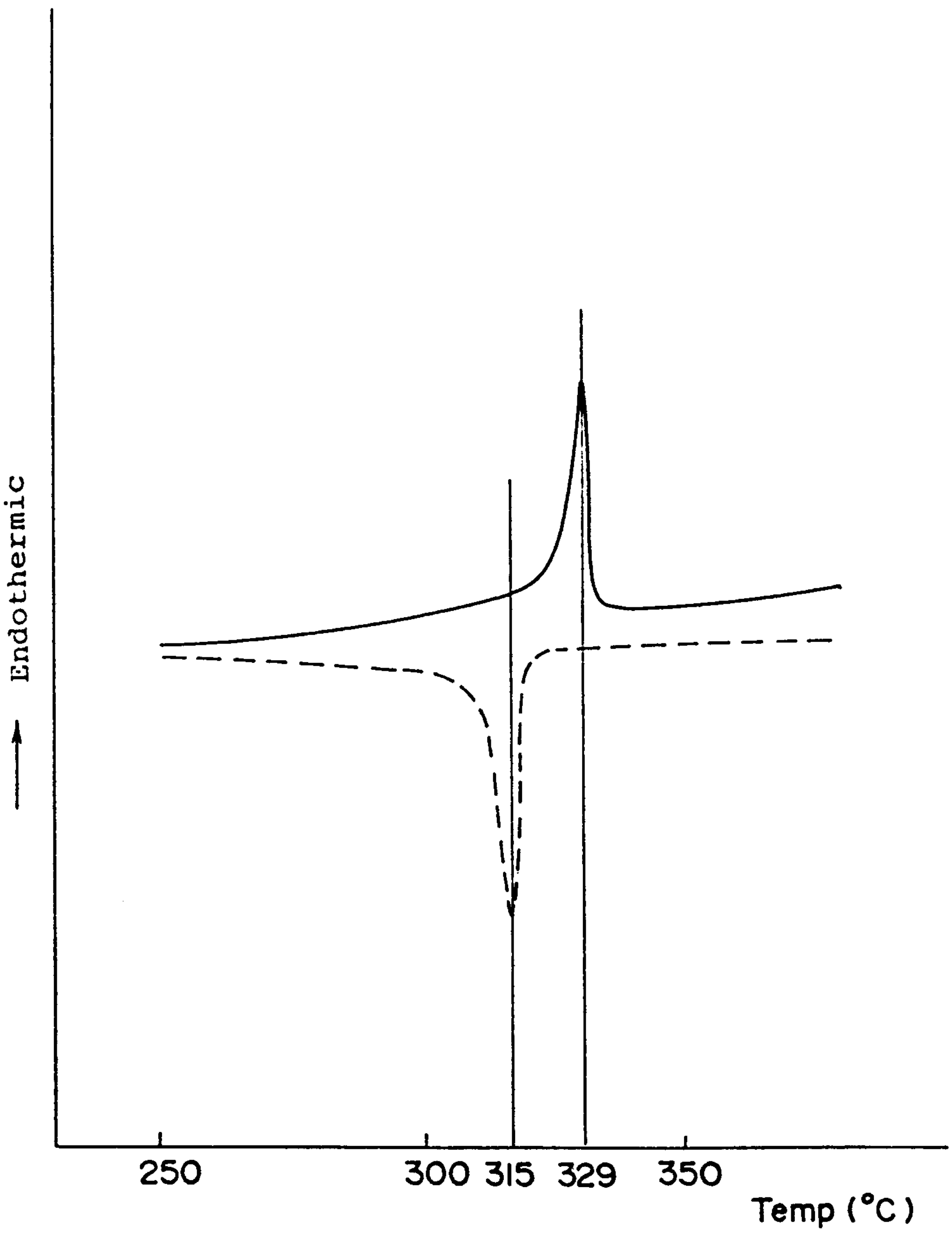

Fig.9

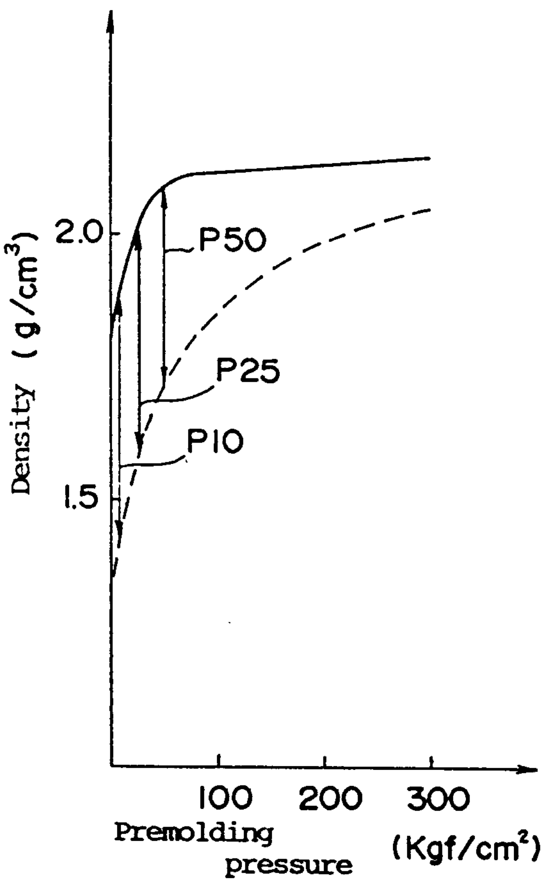
2.0
1.5
Density (g/cm³)
P50
P25
P10
100
200
300
Premolding pressure
(Kgf/cm²)

Fig. 10

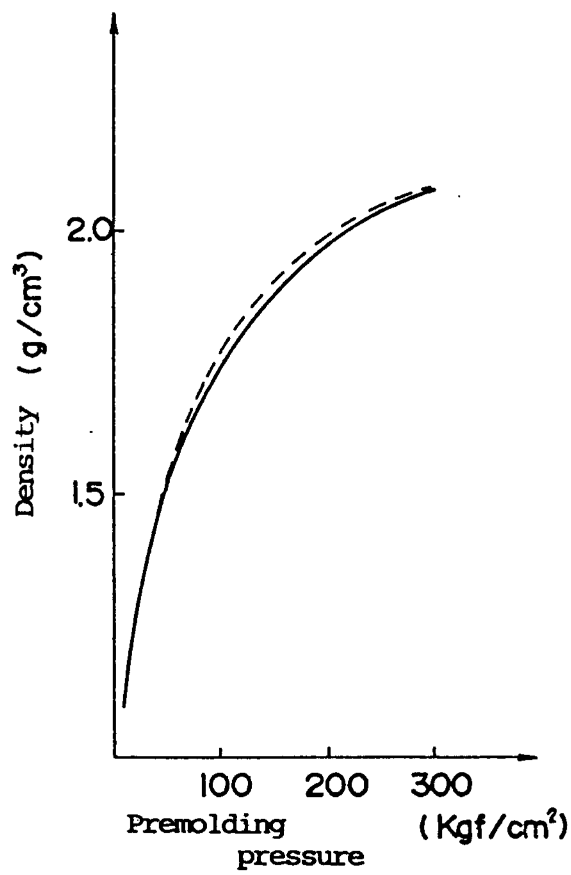
2.0
1.5
Density (g/cm³)
100
200
300
Premolding pressure
(Kgf/cm²)